# EUROPEAN PATENT APPLICATION

(11) **EP 4 645 913 A1**
(43) Date of publication of application: **05.11.2025**
(21) Application number: 23910175.1
(22) Date of filing: 14.12.2023
(51) Int. Cl.: H04W 4/029

(54) **DEVICE POSITION DETERMINATION METHOD AND APPARATUS, SELF-MOVING DEVICE, AND READABLE STORAGE MEDIUM**

(30) Priority: 30.12.2022 CN 202211732828
(71) Applicant: Beijing Roborock Innovation Technology Co., Ltd., Beijing 102206 (CN)
(72) Inventor: XIAO, Fujian, Beijing 102206 (CN); YANG, Yidong, Beijing 102206 (CN)
(74) Representative: Cabinet Beau de Loménie
(86) International application number: PCT/CN2023/138749
(87) International publication number: WO 2024/140245

(57) **Abstract**

The present application relates to the technical field of device control, and discloses a device position determination method and apparatus, a self-moving device, and a readable storage medium. The method comprises : recording a target sleep duration, and comparing the target sleep duration with a preset sleep duration, wherein the target sleep duration is used for indicating a duration in which a self-moving device is continuously in a sleep state; and when it is determined by means of the comparison that the target sleep duration is equal to the preset sleep duration, sending positioning information to a storage address, so that a user can learn about the actual position of the device on the basis of the positioning information.

## Description

The present application claims priority to Chinese Patent Application No. 202211732828.7, filed with the China National Intellectual Property Administration on December 30, 2022 and entitled "METHOD AND APPARATUS FOR DETERMINING POSITION OF DEVICE, SELF-MOBILE DEVICE, AND READABLE STORAGE MEDIUM", the content of which is incorporated herein by reference in its entirety.

### TECHNICAL FIELD

The present application relates to the technical field of device control, and in particular, to a method and apparatus for determining a position of a device, a self-mobile device, and a readable storage medium.

### BACKGROUND

A self-mobile device, for example, a self-propelled sweeping device, a self-propelled mopping device, and a self-propelled window-cleaning device, is a type of device that can automatically move with the control of a program. The self-mobile device can work by itself. After the self-mobile device is in a standby state, a pause state, an error state, or the like, and remains stationary outside a pile and fails to return to the charging pile for a certain period of time, for example, after 10 minutes, the self-mobile device enters a sleep state to save power as much as possible. After the sleep state reaches a certain period of time, for example, after 12 hours, the self-mobile device will be powered off to further save power, thereby preventing the self-mobile device from being unable to be powered on subsequently due to full power consumption caused by its absence from the charging pile. In these cases, the self-mobile device is not on the charging pile, which may result in the user being unable to find the corresponding self-mobile device for the next use.

**In** the related art, an application terminal may send control information to the self-mobile device, and the self-mobile device uploads a current position in response to the control information, and then the current position of the self-mobile device is displayed on a scenario map of the application terminal. However, if the self-mobile device is already in the power-off state at the moment when the application terminal sends the control information to the self-mobile device, the self-mobile device cannot upload the current position in response to the control information, which results in the user being unable to find the self-mobile device. Therefore, how to determine the position of the self-mobile device outside the charging pile before it is powered off becomes an urgent problem to be solved.

### SUMMARY

**In** view of this, the present application provides a method and apparatus for determining a position of a device, a self-mobile device, and a readable storage medium, which are mainly intended to solve the problem of how to determine the position of the self-mobile device outside a charging pile before it is powered off currently.

According to a first aspect of the present application, a method for determining a position of a device is provided. The method includes:
recording a target sleep duration, and comparing the target sleep duration with a preset sleep duration, where the target sleep duration is used for indicating a duration in which a self-mobile device is continuously in a sleep state; and
sending positioning information to a storage address when it is determined through comparison that the target sleep duration is equal to the preset sleep duration, such that a user is capable of acquiring an actual position of the device based on the positioning information.

**In** some embodiments, before recording the target sleep duration, the method further includes:
sending device information to a server when a network connection is detected, such that the server determines storage information associated with the self-mobile device according to the device information; and
receiving the storage information sent by the server, and storing the storage information.

**In** some embodiments, after comparing the target sleep duration with the preset sleep duration, the method further includes:
continuing to record a target sleep duration of a next moment when it is determined through comparison that the target sleep duration is less than the preset sleep duration, and comparing the target sleep duration with the preset sleep duration until it is determined through comparison that the recorded target sleep duration is equal to the preset sleep duration.

**In** some embodiments, sending the positioning information to the storage address includes:
packaging the positioning information to obtain a positioning data packet, where the positioning information is map information and position coordinates that are read in the sleep state;
reading storage information associated with the self-mobile device, and encrypting the positioning data packet by a key recorded in the storage information to obtain an encrypted data packet; and
sending the encrypted data packet to the storage address recorded in the storage information.

**In** some embodiments, after sending the positioning information to the storage address, the method further includes:
identifying an upload state sent by a server; and
setting an upload success flag in a local memory when the upload state indicates an upload success.

**In** some embodiments, after sending the positioning information to the storage address, the method further includes:
checking a local memory in real time or periodically; and
resending the positioning information to the storage address if the upload success flag does not exist in the local memory until the upload success flag is detected in the local memory or the self-mobile device is in a power-off state.

**In** some embodiments, the method further includes:
deleting an upload success flag in a local memory when a direct operation instruction is detected, where the direct operation instruction is used for indicating an instruction initiated by the user on the self-mobile device; and
sending a deletion request to a server when a network connection is detected, and controlling, based on the deletion request, the server to delete the positioning information in the storage address.

According to a second aspect of the present application, an apparatus for determining a position of a device is provided. The apparatus includes:
a recording module, configured to record a target sleep duration, and compare the target sleep duration with a preset sleep duration, where the target sleep duration is used for indicating a duration in which a self-mobile device is continuously in a sleep state; and
an uploading module, configured to send positioning information to a storage address when it is determined through comparison that the target sleep duration is equal to the preset sleep duration, such that a user is capable of acquiring an actual position of the device based on the positioning information.

**In** some embodiments, the apparatus further includes:
a detection module, configured to send device information to a server when a network connection is detected, such that the server determines storage information associated with the self-mobile device according to the device information; and
a storage module, configured to receive the storage information sent by the server, and store the storage information.

In some embodiments, the uploading module is further configured to continue to record a target sleep duration of a next moment when it is determined through comparison that the target sleep duration is less than the preset sleep duration, and compare the target sleep duration with the preset sleep duration until it is determined through comparison that the recorded target sleep duration is equal to the preset sleep duration.

In some embodiments, the uploading module is configured to package the positioning information to obtain a positioning data packet, where the positioning information is map information and position coordinates that are read in the sleep state; read storage information associated with the self-mobile device, and encrypt the positioning data packet by a key recorded in the storage information to obtain an encrypted data packet; and send the encrypted data packet to the storage address recorded in the storage information.

In some embodiments, the apparatus further includes:
an identification module, configured to identify an upload state sent by a server; and
a setting module, configured to set an upload success flag in a local memory when the upload state indicates an upload success.

In some embodiments, the uploading module is further configured to check a local memory in real time or periodically, and resend the positioning information to the storage address if the upload success flag does not exist in the local memory until the upload success flag is detected in the local memory or the self-mobile device is in a power-off state.

In some embodiments, the apparatus further includes:
a deletion module, configured to delete an upload success flag in a local memory when a direct operation instruction is detected, where the direct operation instruction is used for indicating an instruction initiated by the user on the self-mobile device; and
a sending module, configured to send a deletion request to a server when a network connection is detected, and control, based on the deletion request, the server to delete the positioning information in the storage address.

According to a third aspect of the present application, an electronic device is provided. The electronic device includes a memory and a processor. The memory has a computer program stored therein, and the processor, when executing the computer program, implements the steps of the method according to any one of the embodiments of the first aspect.

According to a fourth aspect of the present application, a computer-readable storage medium having a computer program stored thereon is provided. The computer program, when executed by a processor, implements the steps of the method according to any one of the embodiments of the first aspect.

According to the foregoing technical solutions, the present application provides the method and apparatus for determining the position of the device, the self-mobile device, and the readable storage medium. In the present application, when it is detected that the self-mobile device enters a sleep state, the target sleep duration in which the self-mobile device is continuously in the sleep state is recorded. Further, the target sleep duration is compared with a preset sleep duration. The positioning information is sent to the storage address when it is determined through comparison that the target sleep duration is equal to the preset sleep duration. In this way, after the user starts an application terminal, the position corresponding to the self-mobile device is displayed in a control plug-in of the application terminal according to the positioning information. In the present application, the upload time of the positioning information is specified by the preset sleep duration, such that the self-mobile device has sufficient time to upload the positioning information before being powered off, and the timeliness of the positioning information can also be ensured. After the positioning information is successfully uploaded to the storage address of the server, the application terminal may acquire the positioning information from the storage address, such that the user can view the position of the corresponding self-mobile device in the control plug-in of the application terminal, thereby helping the user retrieve the self-mobile device. The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present application. In addition, the same reference numerals are used to represent the same components throughout the drawings. In the drawings:
FIG. 1 is a schematic flowchart of a method for determining a position of a device according to an embodiment of the present application;
FIG. 2 is a schematic flowchart of a method for determining a position of a device according to an embodiment of the present application;
FIG. 3 is a schematic structural diagram of an apparatus for determining a position of a device according to an embodiment of the present application;
FIG. 4 is a schematic structural diagram of an apparatus for determining a position of a device according to an embodiment of the present application;
FIG. 5 is a schematic structural diagram of an apparatus for determining a position of a device according to an embodiment of the present application;
FIG. 6 is a schematic structural diagram of an apparatus for determining a position of a device according to an embodiment of the present application; and
FIG. 7 is a schematic structural diagram of an electronic device according to an embodiment of the present application.

### DETAILED DESCRIPTION

Exemplary embodiments of the present application will be described in more detail below with reference to the drawings. While the exemplary embodiments of the present application are shown in the drawings, it should be understood that the present application may be embodied in various forms and should not be limited to the embodiments set forth herein. Rather, these embodiments are provided such that the present application will be thoroughly understood, and the scope of the present application will be fully conveyed to those skilled in the art.

A self-mobile device, for example, a self-propelled sweeping device, a self-propelled mopping device, and a self-propelled window-cleaning device, is a type of device that can automatically move with the control of a program. The self-mobile device can work by itself. After the self-mobile device is in a standby state, a pause state, an error state, or the like, and remains stationary outside a pile and fails to return to the charging pile for a certain period of time, for example, after 10 minutes, the self-mobile device enters a sleep state to save power as much as possible. After the sleep state reaches a certain period of time, for example, after 12 hours, the self-mobile device will be powered off to further save power, thereby preventing the self-mobile device from being unable to be powered on subsequently due to full power consumption caused by its absence from the charging pile. In these cases, the self-mobile device is not on the charging pile, which may result in the user being unable to find the corresponding self-mobile device for the next use. At present, an application terminal may send control information to the self-mobile device, and the self-mobile device uploads a current position in response to the control information, and then the current position of the self-mobile device is displayed on a scenario map of the application terminal. However, if the self-mobile device is already in the power-off state at the moment when the application terminal sends the control information to the self-mobile device, the self-mobile device cannot upload the current position in response to the control information, which results in the user being unable to find the self-mobile device. Therefore, in order to determine the position of the self-mobile device outside the charging pile before power-off, the present application provides a method for determining a position of a device. In the present application, when it is detected that the self-mobile device enters a sleep state, a target sleep duration in which the self-mobile device is continuously in the sleep state is recorded. Further, the target sleep duration is compared with a preset sleep duration. The positioning information is sent to a storage address when it is determined through comparison that the target sleep duration is equal to the preset sleep duration. In this way, after the user starts an application terminal, the position corresponding to the self-mobile device is displayed in a control plug-in of the application terminal according to the positioning information. In the present application, the upload time of the positioning information is specified by the preset sleep duration, such that the self-mobile device has sufficient time to upload the positioning information before being powered off, and the timeliness of the positioning information can also be ensured. After the positioning information is successfully uploaded to the storage address of the server, the application terminal may acquire the positioning information from the storage address, such that the user can view the position of the corresponding self-mobile device in the control plug-in of the application terminal, thereby helping the user retrieve the self-mobile device.

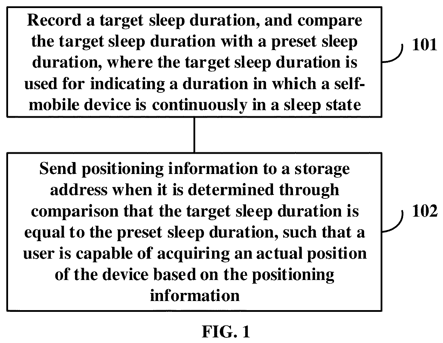

An embodiment of the present application provides a method for determining a position of a device. As shown in FIG. 1, the method includes:

In step 101, a target sleep duration is recorded, and the target sleep duration is compared with a preset sleep duration, where the target sleep duration is used for indicating a duration in which a self-mobile device is continuously in a sleep state.

The method is applicable to the self-mobile device. After the self-mobile device is in a standby state, a pause state, an error state, or the like, and remains stationary outside a pile and fails to return to the charging pile for 10 minutes, the self-mobile device enters the sleep state. In an actual running process, a timer may be set on the self-mobile device. After the self-mobile device enters the sleep state, the target sleep duration may be obtained by continuously recording, by using the timer, the time in which the self-mobile device is continuously in the sleep state. Further, in order to better determine the moment when the self-mobile device uploads the positioning information, a relevant technician may upload the preset sleep duration in advance. Specifically, the default preset sleep duration of the self-mobile device is 11 hours and 50 minutes, that is, the positioning information starts to be uploaded 10 minutes before the self-mobile device is powered off. Through the preset sleep duration, the self-mobile device has sufficient time to upload the positioning information before being powered off, and the timeliness of the positioning information can also be ensured. It should be noted that the user may also change the preset sleep duration at the application terminal according to the actual situation. The self-mobile device compares the preset sleep duration set by the user with the target sleep duration, and uploads the positioning information when it is determined through comparison that the target sleep duration is equal to the preset sleep duration.

In step 102, the positioning information is sent to a storage address when it is determined through comparison that the target sleep duration is equal to the preset sleep duration, such that a user is capable of acquiring an actual position of the device based on the positioning information.

In the sleep state, the self-mobile device does not move by itself to change its position. Therefore, after being in the sleep state, the self-mobile device may acquire information that can describe the position of the self-mobile device as the positioning information, such as one or more of a real-time map, a traveled path, a virtual wall, a forbidden region, a robot position, a pile position, an identified obstacle, furniture, and the like. Further, the positioning information is packaged into a data packet and sent to the storage address of the server when it is determined through comparison that the target sleep duration is equal to the preset sleep duration. The next time the user opens the application terminal, if the device is not online, the application terminal may acquire the positioning information of the self-mobile device from the storage address of the server through a network connection. If corresponding positioning information exists in the storage address, the application terminal may enter the control plug-in corresponding to the self-mobile device, and then display the position corresponding to the self-mobile device to the user in the control plug-in according to the positioning information, such that the user can conveniently find the position of the self-mobile device. It should be noted that each self-mobile device corresponds to one storage address in the server for storing the positioning information uploaded by the self-mobile device. The application terminal may be a mobile phone client of a self-mobile device downloaded from an application market. The user may connect a plurality of self-mobile devices through the application terminal, and an operation interface of the self-mobile device on the application terminal is the control plug-in.

According to the method provided in the embodiment of the present application, when it is detected that the self-mobile device enters the sleep state, the target sleep duration in which the self-mobile device is continuously in the sleep state is recorded. Further, the target sleep duration is compared with a preset sleep duration. The positioning information is sent to a storage address when it is determined through comparison that the target sleep duration is equal to the preset sleep duration. In this way, after the user starts an application terminal, the position corresponding to the self-mobile device is displayed in a control plug-in of the application terminal according to the positioning information. In the present application, the upload time of the positioning information is specified by the preset sleep duration, such that the self-mobile device has sufficient time to upload the positioning information before being powered off, and the timeliness of the positioning information can also be ensured. After the positioning information is successfully uploaded to the storage address of the server, the application terminal may acquire the positioning information from the storage address, such that the user can view the position of the corresponding self-mobile device in the control plug-in of the application terminal, thereby helping the user retrieve the self-mobile device.

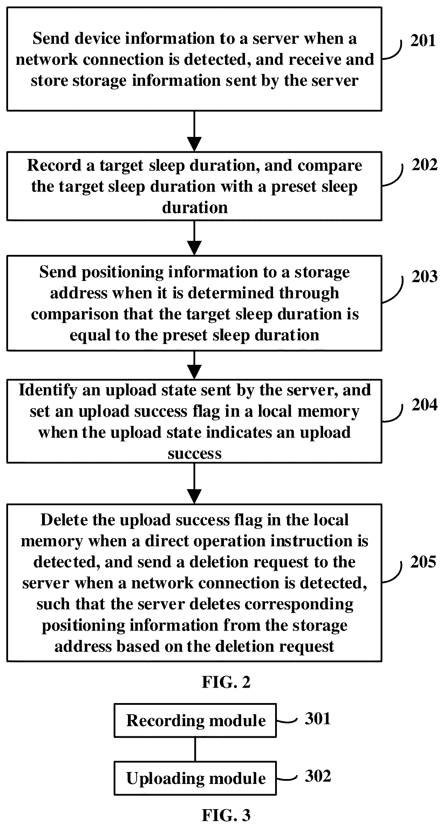

An embodiment of the present application provides a method for determining a position of a device. As shown in FIG. 2, the method includes:

In step 201, device information is sent to a server when a network connection is detected, and storage information sent by the server is received and stored.

In the embodiment of the present application, considering that the user has a plurality of self-mobile devices, in order to accurately determine which self-mobile device the received positioning information belongs to, an Internet of Things (IoT) server in the present application allocates dedicated storage information to each self-mobile device based on the device information uploaded by the self-mobile device, and associates the storage information with the corresponding self-mobile device, where the storage information includes a storage address and a key. Further, in order to facilitate the self-mobile device to access the storage information in time, after receiving the storage information sent by the server, the self-mobile device stores the received storage information in a local memory.

Specifically, the self-mobile device first detects a network connection state. When the network connection state is an online state, that is, when a network connection exists between the self-mobile device and the server, the self-mobile device sends information such as a device id, a device model, an offline information type, and a storage file name of the self-mobile device to the server as the device information, and applies to the server for a cloud storage address pre-signed URL with a signature, that is, the storage address. It should be noted that each self-mobile device corresponds to one storage address. When a new data packet is uploaded, the new data packet will overwrite the data information of the previous data packet, thereby maintaining the timeliness of the data information. In addition, the server will also allocate a specified key, Local key, to the self-mobile device for data encryption during the network connection. In addition, the network connection state includes an online state and an offline state. The online state is used for indicating that the network connection exists between the self-mobile device and the server, and the offline state is used for indicating that the network connection does not exist between the self-mobile device and the server. Further, the server sends the allocated storage address and specified key to the self-mobile device. The self-mobile device may receive the storage address and the specified key, and store the storage address and the specified key in the local memory.

In step 202, a target sleep duration is recorded and compared with a preset sleep duration.

When the self-mobile device is in the sleep state, only a few sensors (a drop sensor, an acceleration sensor, a gyroscope, a dust box, a water tank, and a vibration mopping board) are powered on, and meanwhile, a master control MCU is notified to enter a suspended state to reduce power consumption. After the self-mobile device is in the sleep state for 12 hours, in order to save power as much as possible and prevent the self-mobile device from being unable to be powered on subsequently due to full power consumption caused by its absence from the charging pile, the self-mobile device is powered off by itself. Therefore, in the present application, the positioning information is uploaded after the self-mobile device sleeps for a specific time, such that the user can subsequently find the self-mobile device. In order to determine whether the current moment has reached a preset upload time point, the self-mobile device needs to record the target sleep duration in which the self-mobile device is continuously in the sleep state, and compare the target sleep duration with the preset sleep duration.

In an actual running process, in order to determine the moment when the self-mobile device uploads the positioning information, a relevant technician may upload the preset sleep duration in advance. Specifically, the default preset sleep duration of the self-mobile device is 11 hours and 50 minutes, that is, the positioning information starts to be uploaded 10 minutes before the self-mobile device is powered off. Through the preset sleep duration, the self-mobile device has sufficient time to upload the positioning information before being powered off, and the timeliness of the positioning information can also be ensured. It should be noted that the user may also change the preset sleep duration at the application terminal according to the actual situation. The self-mobile device compares the preset sleep duration set by the user with the target sleep duration. Further, the self-mobile device may compare the target sleep duration with the preset sleep duration by setting a timer. Specifically, when it is detected that the self-mobile device enters the sleep state, the timer is started for timing, and the timing duration of the timer at each moment is the target sleep duration at the current moment. When the timing duration of the timer reaches the preset sleep duration, the positioning information is uploaded. Alternatively, the target sleep duration is compared with the preset sleep duration by using the timer. Specifically, the preset sleep duration is acquired, the timer is set by using the preset sleep duration, and the positioning information is uploaded when a countdown of the timer expires. It should be noted that the user may also change the preset sleep duration at the application terminal according to the actual situation. The self-mobile device compares the preset sleep duration set by the user with the target sleep duration and uploads the positioning information.

In step 203, the positioning information is sent to the storage address when it is determined through comparison that the target sleep duration is equal to the preset sleep duration.

When it is determined through comparison that the target sleep duration is less than the preset sleep duration, the timer of the self-mobile device will continue to record the target sleep duration, and the target sleep duration is compared with the preset sleep duration until it is determined through comparison that the recorded target sleep duration is equal to the preset sleep duration. At this moment, the self-mobile device may upload the positioning information to the storage address of the server, such that the application terminal may subsequently acquire the positioning information at the storage address, and display the position of the self-mobile device to the user according to the positioning information.

Specifically, after being in the sleep state, the self-mobile device may acquire information that can describe the position of the self-mobile device as the positioning information, such as one or more of a real-time map, a traveled path, a virtual wall, a forbidden region, a robot position, a pile position, an identified obstacle, furniture, and the like. Next, when it is determined through comparison that the target sleep duration is equal to the preset sleep duration, the positioning information is packaged into a positioning data packet, and the positioning data packet is encrypted by using the key recorded in the storage information to obtain an encrypted data packet, thereby improving data transmission security. Finally, the self-mobile device uploads the encrypted data packet to the server, that is, transmits the encrypted data packet to the storage address recorded in the storage information. It should be noted that after receiving the positioning information, the server will perform a second authentication on the positioning information according to the storage information associated with the self-mobile device, and store the positioning information in the storage address after the authentication is passed.

In an actual running process, the user may search for the actual position of the self-mobile device through the application terminal. Specifically, after the user starts the application terminal, if the self-mobile device is online, the self-mobile device is connected to the server. At this time, the user may enter a control plug-in corresponding to the self-mobile device, acquire real-time map information of the self-mobile device through a get_map interface, and normally acquire information such as a user map, so as to know various information including the position of the self-mobile device. If the device is not online, the self-mobile device is disconnected from the server, the self-mobile device cannot upload the information, and instructions of the application terminal cannot be normally issued to the self-mobile device. However, since the application terminal and the server are connected at this time, the application terminal may apply to the server for an offline data packet, that is, the positioning information, uploaded by the self-mobile device before power-off. If the offline data packet exists on the server, the application terminal may enter the control plug-in corresponding to the self-mobile device and display the position of the self-mobile device according to the information of the offline data packet. It should be noted that if no offline data packet exists on the server, the application terminal cannot acquire the position information of the self-mobile device before going offline. At this time, the application terminal will display an offline reason of the self-mobile device to the user, which may specifically be a scenario that the user needs immediate shutdown protection, such as active shutdown, battery abnormality, etc., shutdown due to long sleep, or poor network conditions of the environment where a robot needs to send a packet after being in the sleep state.

In step 204, an upload state sent by the server is identified, and an upload success flag is set in the local memory when the upload state indicates an upload success.

In the embodiment of the present application, in order to avoid pressure on the server caused by repeated uploading, the self-mobile device sets the upload success flag after it is determined that the positioning information is successfully uploaded to the server, such that the self-mobile device subsequently determines whether it is necessary to re-upload the positioning information to the server according to whether there is the upload success flag.

Specifically, the self-mobile device receives the upload state returned by the server, identifies the upload state, and determines the content indicated by the upload state. When the upload state indicates that the positioning information is successfully uploaded, the self-mobile device sets the upload success flag in the local memory. When the upload state indicates that the positioning information fails to be uploaded, the self-mobile device does not need to perform any operation. Next, the self-mobile device may check the local memory in real time or periodically to determine whether the upload success flag exists in the local memory. If the upload success flag is detected in the local memory, the upload of the positioning information is stopped. If the upload success flag is not detected in the local memory, the upload is attempted again after a period of time until the upload succeeds or the device is powered off. For example, when the self-mobile device is in a real-time check mode, if the upload success flag is not detected, in an actual running process, a second preset duration is queried in the local memory, and the timer is set by using the second preset duration (timing starts when the self-mobile device does not detect the upload success flag in the local memory). Subsequently, when the timing duration of the timer reaches the second preset duration, the positioning information is packaged again and sent to the storage address until the upload success flag is detected in the local memory or the self-mobile device is in a power-off state. When the self-mobile device is in a periodic check mode, the second preset duration is queried in the local memory, and the timer is set by using the second preset duration (timing starts at the moment of sending the positioning information). The local memory is checked when the timing duration of the timer reaches the second preset duration. If the upload success flag is not detected, the positioning information is repackaged and sent to the storage address until the upload success flag is detected in the local memory or the self-mobile device is in the power-off state.

By setting the second preset duration, it is possible to continuously attempt to upload the positioning information before the self-mobile device is powered off, thereby increasing the probability of successful uploading. At the same time, the inherent setting that the robot is powered off after the sleep time reaches the set value is not affected, and excessive power consumption in the case of unsuccessful uploading is prevented, which could otherwise cause difficulty in future use.

In step 205, when a direct operation instruction is detected, the upload success flag in the local memory is deleted, and when a network connection is detected, a deletion request is sent to the server, such that the server deletes corresponding positioning information from the storage address based on the deletion request.

In the embodiment of the present application, in order to prevent an upload failure caused by the upload success flag in the local memory when the positioning information is subsequently uploaded, the self-mobile device deletes the upload success flag in the local memory after the user performs a direct operation on the machine.

Specifically, when the direct operation instruction initiated by the user on the self-mobile device is detected, for example, when the self-mobile device is powered on again or the user reconfigures a network, the upload success flag in the local memory is deleted. It should be noted that power-on (the user operates a robot power-on key) and network configuration (the user operates the robot to perform the network connection) mean that the user has found the machine and performed a corresponding operation on the machine, and the position information of the last time is no longer needed subsequently. Therefore, the upload success flag needs to be deleted in advance to prepare for subsequent upload.

At this time, the uploaded data packet actually needs to be deleted, but only after the self-mobile device is successfully connected to the network through the network configuration operation (that is, the robot goes online), the self-mobile device can communicate with the server through the network to delete the data packet. Specifically, the self-mobile device first detects a network connection state. Subsequently, when the network connection state is an online state, the deletion request is sent to the server, such that the server deletes the corresponding positioning information from the storage address based on the deletion request.

According to the method provided in the embodiment of the present application, when it is detected that the self-mobile device enters the sleep state, the target sleep duration in which the self-mobile device is continuously in the sleep state is recorded. Further, the target sleep duration is compared with a preset sleep duration. The positioning information is sent to the storage address when it is determined through comparison that the target sleep duration is equal to the preset sleep duration. In this way, after the user starts an application terminal, the position corresponding to the self-mobile device is displayed in a control plug-in of the application terminal according to the positioning information. In the present application, the upload time of the positioning information is specified by the preset sleep duration, such that the self-mobile device has sufficient time to upload the positioning information before being powered off, and the timeliness of the positioning information can also be ensured. After the positioning information is successfully uploaded to the storage address of the server, the application terminal may acquire the positioning information from the storage address, such that the user can view the position of the corresponding self-mobile device in the control plug-in of the application terminal, thereby helping the user retrieve the self-mobile device.

Further, as a specific implementation of the method shown in FIG. 1, an embodiment of the present application provides an apparatus for determining a position of a device. As shown in FIG. 3, the apparatus includes a recording module 301 and an uploading module 302.

The recording module 301 is configured to record a target sleep duration, and compare the target sleep duration with a preset sleep duration, where the target sleep duration is used for indicating a duration in which a self-mobile device is continuously in a sleep state.

The uploading module 302 is configured to send positioning information to a storage address when it is determined through comparison that the target sleep duration is equal to the preset sleep duration, such that a user is capable of acquiring an actual position of the device based on the positioning information.

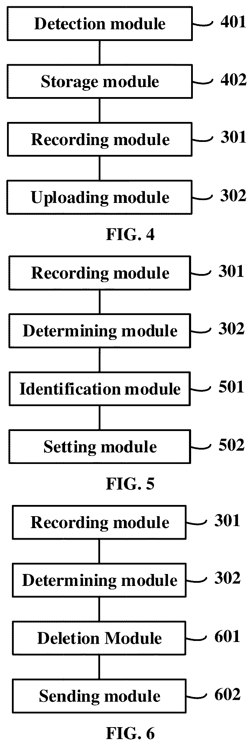

**In** some embodiments, as shown in FIG. 4, the apparatus further includes a detection module 401 and a storage module 402.

The detection module 401 is configured to send device information to a server when a network connection is detected, such that the server determines storage information associated with the self-mobile device according to the device information.

The storage module 402 is configured to receive the storage information sent by the server and store the storage information.

In some embodiments, the uploading module 302 is further configured to continue to record a target sleep duration of a next moment when it is determined through comparison that the target sleep duration is less than the preset sleep duration, and compare the target sleep duration with the preset sleep duration until it is determined through comparison that the recorded target sleep duration is equal to the preset sleep duration.

In some embodiments, the uploading module 303 is configured to package the positioning information to obtain a positioning data packet, where the positioning information is map information and position coordinates that are read in the sleep state; read storage information associated with the self-mobile device, and encrypt the positioning data packet by a key recorded in the storage information to obtain an encrypted data packet; and send the encrypted data packet to the storage address recorded in the storage information.

In some embodiments, as shown in FIG. 5, the apparatus further includes an identification module 501 and a setting module 502.

The identification module 501 is configured to identify an upload state sent by a server.

The setting module 502 is configured to set an upload success flag in a local memory when the upload state indicates an upload success.

In some embodiments, the uploading module 303 is further configured to check a local memory in real time or periodically, and resend the positioning information to the storage address if the upload success flag does not exist in the local memory until the upload success flag is detected in the local memory or the self-mobile device is in a power-off state.

In some embodiments, as shown in FIG. 6, the apparatus further includes a deletion module 601 and a sending module 602.

The deletion module 601 is configured to delete an upload success flag in a local memory when a direct operation instruction is detected, where the direct operation instruction is used for indicating an instruction initiated by the user on the self-mobile device.

The sending module 602 is configured to send a deletion request to a server when a network connection is detected, and control, based on the deletion request, the server to delete the positioning information in the storage address.

According to the apparatus provided in the embodiment of the present application, when it is detected that the self-mobile device enters the sleep state, the target sleep duration in which the self-mobile device is continuously in the sleep state is recorded. Further, the target sleep duration is compared with a preset sleep duration. The positioning information is sent to the storage address when it is determined through comparison that the target sleep duration is equal to the preset sleep duration. In this way, after the user starts an application terminal, the position corresponding to the self-mobile device is displayed in a control plug-in of the application terminal according to the positioning information. In the present application, the upload time of the positioning information is specified by the preset sleep duration, such that the self-mobile device has sufficient time to upload the positioning information before being powered off, and the timeliness of the positioning information can also be ensured. After the positioning information is successfully uploaded to the storage address of the server, the application terminal may acquire the positioning information from the storage address, such that the user can view the position of the corresponding self-mobile device in the control plug-in of the application terminal, thereby helping the user retrieve the self-mobile device.

It should be noted that, for other corresponding descriptions of various functional units related to the apparatus for determining a position of a device according to the embodiment of the present application, reference may be made to the corresponding description in FIG. 1 and FIG. 2. Details are not described herein again.

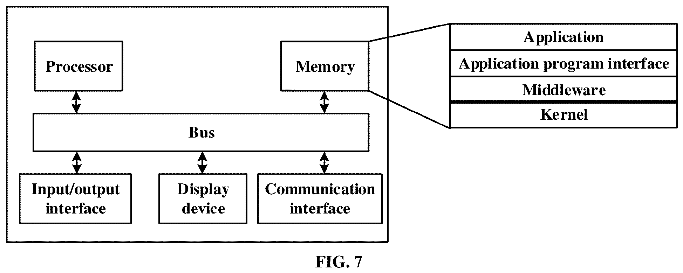

In an exemplary embodiment, referring to FIG. 7, an electronic device is further provided. The device includes a communication bus, a processor, a memory, and a communication interface, and may further include an input/output interface and a display device, where the functional units may communicate with each other through a bus. The memory has a computer program stored therein, and the processor is configured to execute the program stored in the memory to implement the method for determining the position of the device according to the above embodiment.

A computer-readable storage medium has a computer program stored thereon, and the computer program, when executed by a processor, implements the steps of the method for determining the position of the device.

In an embodiment, a computer program product is provided. The computer program product includes a computer program. The computer program, when executed by a processor, implements the steps in the above method embodiments. Based on such an understanding, the technical solutions according to the present application may be implemented in the form of a software product. The software product may be stored in a non-volatile storage medium (which may be a CD-ROM, a USB flash drive, a mobile hard disk, or the like), and includes several instructions for instructing an electronic device (which may be a personal computer, a server, a network device, or the like) to perform the method according to the implementation scenarios of the present application.

Those skilled in the art can understand that the drawings are merely schematic diagrams of a preferred implementation scenario, and the modules or the procedures shown in the drawings are not necessarily required for implementing the present application.

Those skilled in the art can understand that a module of the apparatus in the implementation scenario may be distributed in the apparatus in the implementation scenario based on the description of the implementation scenario, or may be located in one or more apparatuses different from that in the implementation scenario with corresponding changes. The modules in the above implementation scenarios may be combined into one module, or may be further divided into a plurality of submodules.

The serial numbers of the present application are merely for description, and do not represent the advantages and disadvantages of the implementation scenarios.

The content disclosed above is merely several specific implementation scenarios according to the present application, but the present application is not limited thereto. Any variation that can be figured out by those skilled in the art shall fall within the protection scope of the present application.

## Claims

1. A method for determining a position of a device, comprising:
recording a target sleep duration, and comparing the target sleep duration with a preset sleep duration, wherein the target sleep duration is used for indicating a duration in which a self-mobile device is continuously in a sleep state; and
sending positioning information to a storage address when it is determined through comparison that the target sleep duration is equal to the preset sleep duration, such that a user is capable of acquiring an actual position of the device based on the positioning information.

2. The method according to claim 1, wherein before recording the target sleep duration, the method further comprises:
sending device information to a server when a network connection is detected, such that the server determines storage information associated with the self-mobile device according to the device information; and
receiving the storage information sent by the server, and storing the storage information.

3. The method according to claim 1, wherein after comparing the target sleep duration with the preset sleep duration, the method further comprises:
continuing to record a target sleep duration of a next moment when it is determined through comparison that the target sleep duration is less than the preset sleep duration, and comparing the target sleep duration with the preset sleep duration until it is determined through comparison that the recorded target sleep duration is equal to the preset sleep duration.

4. The method according to claim 1, wherein sending the positioning information to the storage address comprises:
packaging the positioning information to obtain a positioning data packet, wherein the positioning information is map information and position coordinates that are read in the sleep state;
reading storage information associated with the self-mobile device, and encrypting the positioning data packet by a key recorded in the storage information to obtain an encrypted data packet; and
sending the encrypted data packet to the storage address recorded in the storage information.

5. The method according to claim 1, wherein after sending the positioning information to the storage address, the method further comprises:
identifying an upload state sent by a server; and
setting an upload success flag in a local memory when the upload state indicates an upload success.

6. The method according to claim 1, wherein after sending the positioning information to the storage address, the method further comprises:
checking a local memory in real time or periodically; and
resending the positioning information to the storage address if the upload success flag does not exist in the local memory until the upload success flag is detected in the local memory or the self-mobile device is in a power-off state.

7. The method according to claim 1, wherein the method further comprises:
deleting an upload success flag in a local memory when a direct operation instruction is detected, wherein the direct operation instruction is used for indicating an instruction initiated by the user on the self-mobile device; and
sending a deletion request to a server when a network connection is detected, and controlling, based on the deletion request, the server to delete the positioning information in the storage address.

8. An apparatus for determining a position of a device, comprising:
a recording module, configured to record a target sleep duration, and compare the target sleep duration with a preset sleep duration, wherein the target sleep duration is used for indicating a duration in which a self-mobile device is continuously in a sleep state; and
an uploading module, configured to send positioning information to a storage address when it is determined through comparison that the target sleep duration is equal to the preset sleep duration, such that a user is capable of acquiring an actual position of the device based on the positioning information.

9. An electronic device, comprising a memory and a processor, wherein the memory has a computer program stored therein, and the processor, when executing the computer program, implements the steps of the method according to any one of claims 1 to 7.

10. A computer program product, comprising a computer program, wherein the computer program, when executed by a processor, implements the following steps:
recording a target sleep duration, and comparing the target sleep duration with a preset sleep duration, wherein the target sleep duration is used for indicating a duration in which a self-mobile device is continuously in a sleep state; and
sending positioning information to a storage address when it is determined through comparison that the target sleep duration is equal to the preset sleep duration, such that a user is capable of acquiring an actual position of the device based on the positioning information.

11. The computer program product according to claim 10, wherein before recording the target sleep duration, the following steps are further comprised:
sending device information to a server when a network connection is detected, such that the server determines storage information associated with the self-mobile device according to the device information; and
receiving the storage information sent by the server, and storing the storage information.

12. The computer program product according to claim 10, wherein after comparing the target sleep duration with the preset sleep duration, the following step is further comprised:
continuing to record a target sleep duration of a next moment when it is determined through comparison that the target sleep duration is less than the preset sleep duration, and comparing the target sleep duration with the preset sleep duration until it is determined through comparison that the recorded target sleep duration is equal to the preset sleep duration.

13. The computer program product according to claim 10, wherein sending the positioning information to the storage address comprises:
packaging the positioning information to obtain a positioning data packet, wherein the positioning information is map information and position coordinates that are read in the sleep state;
reading storage information associated with the self-mobile device, and encrypting the positioning data packet by a key recorded in the storage information to obtain an encrypted data packet; and
sending the encrypted data packet to the storage address recorded in the storage information.

14. The computer program product according to claim 10, wherein after sending the positioning information to the storage address, the following steps are further comprised:
identifying an upload state sent by a server; and
setting an upload success flag in a local memory when the upload state indicates an upload success.

15. The computer program product according to claim 10, wherein after sending the positioning information to the storage address, the following steps are further comprised:
checking a local memory in real time or periodically; and
resending the positioning information to the storage address if the upload success flag does not exist in the local memory until the upload success flag is detected in the local memory or the self-mobile device is in a power-off state.

16. A self-mobile device, comprising a memory and a processor, wherein the memory has a computer program stored therein, and the processor comprises an image capturing assembly, a communication unit, and an analysis transportation unit, wherein the image capturing assembly is configured to capture an image, the communication unit is configured to perform data transmission with a maintenance station and a terminal, the analysis transportation unit is configured to perform image identification analysis, and the processor, when executing the computer program, implements the steps of the method according to any one of claims 1 to 7.

17. A computer-readable storage medium having a computer program stored thereon, wherein the computer program, when executed by a processor, implements the following steps:
recording a target sleep duration, and comparing the target sleep duration with a preset sleep duration, wherein the target sleep duration is used for indicating a duration in which a self-mobile device is continuously in a sleep state; and
sending positioning information to a storage address when it is determined through comparison that the target sleep duration is equal to the preset sleep duration, such that a user is capable of acquiring an actual position of the device based on the positioning information.

18. The computer-readable storage medium according to claim 17, wherein before recording the target sleep duration, the following steps are further comprised:
sending device information to a server when a network connection is detected, such that the server determines storage information associated with the self-mobile device according to the device information; and
receiving the storage information sent by the server, and storing the storage information.

19. The computer-readable storage medium according to claim 17, wherein after comparing the target sleep duration with the preset sleep duration, the following step is further comprised:
continuing to record a target sleep duration of a next moment when it is determined through comparison that the target sleep duration is less than the preset sleep duration, and comparing the target sleep duration with the preset sleep duration until it is determined through comparison that the recorded target sleep duration is equal to the preset sleep duration.

20. The computer-readable storage medium according to claim 17, wherein sending the positioning information to the storage address comprises:
packaging the positioning information to obtain a positioning data packet, wherein the positioning information is map information and position coordinates that are read in the sleep state;
reading storage information associated with the self-mobile device, and encrypting the positioning data packet by a key recorded in the storage information to obtain an encrypted data packet; and
sending the encrypted data packet to the storage address recorded in the storage information.
